# EUROPEAN PATENT APPLICATION

(11) **EP 3 660 631 A1**
(43) Date of publication of application: **03.06.2020**
(21) Application number: 19210962.7
(22) Date of filing: 22.11.2019
(51) Int. Cl.: G06F 3/01, G06F 1/16

(54) **VARIABLE CURVATURE INTERACTIVE DEVICES**

(30) Priority: 30.11.2018 US 201816207017
(71) Applicant: Immersion Corporation, San Jose, CA 95134 (US)
(72) Inventor: CRUZ-HERNANDEZ, Juan Manuel, Montreal, Québec H3Z 1T1 (CA); KHOSHKAVA, Vahid, Montreal, Québec H2X 3R4 (CA)
(74) Representative: Hofstetter, Schurack & Partner

(57) **Abstract**

Variable curvature interactive devices are provided. The variable curvature interactive devices include a panel and one or more actuators. The one or more actuators are configured to provide a bending force to the panel to modify a curvature of the panel and thereby provide haptic effect. Haptic effects provided by curvature modifications include stiffness changes in the panel, vibration haptic effects, and kinesthetic effects. The variable curvature interactive devices may include actuators to modify the curvature along one or more dimensions to provide the haptic effects. The variable curvature interactive devices may further be configured to receive user inputs.

## Description

### FIELD OF THE INVENTION

The present invention relates to interactive devices configured to receive user input and provide output haptic effects through curvature adjustments. In particular, embodiments hereof are directed to interactive devices and methods of interaction employing actuators to vary or modulate the curvature of a substrate or device configured for user interaction.

### BACKGROUND OF THE INVENTION

Increasingly, computer systems, including immersive reality systems, present output to a user through multiple modalities, including visual, audible, haptic, and kinesthetic outputs. Such computer systems may also allow user input through non-conventional modalities that extend beyond traditional mice and gaming controllers. As computer systems evolve, methods and devices for interacting with them may evolve as well.

The inventions described herein provide methods and devices for user interactivity wherein the user inputs are received and haptic outputs are provided based on curvature modifications of an interactive device.

### BRIEF SUMMARY OF THE INVENTION

In an embodiment, a variable curvature interactive device is provided. The variable curvature interactive device includes a panel having a length dimension and a width dimension, wherein the length axis and the width axis defining a plane of the substrate. The variable curvature interactive device further includes an actuator disposed on the panel, the actuator being configured to provide a bending force to the substrate in a direction of the width dimension when activated; and a circuit configured to provide an activation signal to the actuator. The actuator is configured such that the bending force induces a curvature in the panel in the direction of the width dimension, the curvature of the panel causing an increase in the stiffness of the panel in a direction of the length dimension.

In another embodiment, a method of modifying the curvature of a variable curvature interactive device is provided. The method includes providing an activation signal to an actuator disposed on a panel having a length dimension and a width dimension, wherein the length dimension and the width dimension define a plane of the panel; providing a bending force to the panel in a direction of the width dimension by the actuator in response to the activation signal; inducing a curvature in the panel in the direction of the width dimension by the bending force; and increasing the stiffness of the panel in the direction of the length dimension based on the curvature.

### BRIEF DESCRIPTION OF THE DRAWINGS

The foregoing and other features and advantages of the invention will be apparent from the following description of embodiments hereof as illustrated in the accompanying drawings. The accompanying drawings, which are incorporated herein and form a part of the specification, further serve to explain the principles of the invention and to enable a person skilled in the pertinent art to make and use the invention. The drawings are not to scale.
FIGS. 1 illustrates a system for modifying a stiffness of a variable curvature interactive device having a curvature that may be varied or changed.
FIG. 2 is a schematic illustration of a system for modifying a curvature of a variable curvature interactive device.
FIGS. 3A-3C illustrate operation of a system for modifying a curvature of a variable curvature interactive device.
FIGS. 4A and 4B illustrate an increase in bending stiffness of a beam induced by curvature.
FIG. 5 illustrates the use of a variable curvature interactive device as a user interactive input/output device
FIG. 6 illustrates a variable curvature interactive device configured for multi-axis stiffness modification.
FIG. 7 illustrates a user device incorporating a variable curvature interactive device according to embodiments.
FIG. 8 illustrates a variable curvature interactive device incorporated into an immersive reality system.
FIGS. 9 illustrates a process for modifying a curvature of an interactive device.

### DETAILED DESCRIPTION OF THE INVENTION

Specific embodiments of the present invention are now described with reference to the figures. The following detailed description is merely exemplary in nature and is not intended to limit the invention or the application and uses of the invention. Furthermore, there is no intention to be bound by any expressed or implied theory presented in the preceding technical field, background, brief summary or the following detailed description.

Structures described herein are configured to provide haptic effects while maintaining a thin form factor. Modifying the structures by applying curvature alters the mechanical properties, e.g., stiffness, of the structures described herein. A flat structure can thus exhibit significantly increased stiffness. Curvature may be applied using smart material actuators and/or macrofiber composite actuators. A user can interact with these structures through bending inputs that may be resisted through actuation of the actuators to adjust the stiffness of the display. The structures may be coupled to displays or other output devices and may further adjust the curvature to provide vibrotactile and kinesthetic haptic feedback.

Embodiments of the present invention include devices configured for providing user interactivity through manipulation of and feedback from a variable curvature interactive device. Variable curvature interactive devices, as discussed herein, are interactive devices configured to receive input from a user and provide output to a user. Embodiments of variable curvature interactive devices, as described herein, are configured to provide haptic effects by curvature modifications induced by actuators. Haptic effects induced by curvature modifications include modifications to the stiffness of the interactive device, vibration haptic effects, and kinesthetic movement haptic effects. Variable curvature interactive devices may also receive inputs from a user. Such input received from a user may be received in the form of user manipulation of the variable curvature interactive device, including bending or twisting. Modifications or variations in the stiffness of the variable curvature interactive device change the way the interactive device feels in the user's hands as the user manipulates the interactive device to generate inputs or as the user simply handles the interactive device during use. Variable curvature interactive devices may operate as standalone interactive devices and/or may be incorporated into other electronic devices, such as mobile phones, tablets, and/or gaming controllers. Variable curvature interactive devices may operate to provide interaction with any type of computer system, including immersive reality systems.

Embodiments of the present invention may be used with immersive reality interfaces having multi-modal user outputs including audio, visual, haptic, and kinesthetic effects. Immersive reality, as used herein, describes visual display systems that provide altered reality viewing to a user. Immersive reality environments include virtual reality environments, augmented reality environments, mixed reality environments, and merged reality environments, as well as other similar visual environments. Immersive reality environments are designed to provide visual display environments that mimic a realistic viewing experience and include panoramic imaging where a user's movements determine the display. As a user turns their head or body, the images displayed to the user are adjusted as if the user were inside the immersive reality environment. Immersive reality environments frequently include stereoscopic or other three-dimensional imaging technologies to improve realism. Immersive reality environments may include any mix of real and virtual objects that may or may not interact with one another.

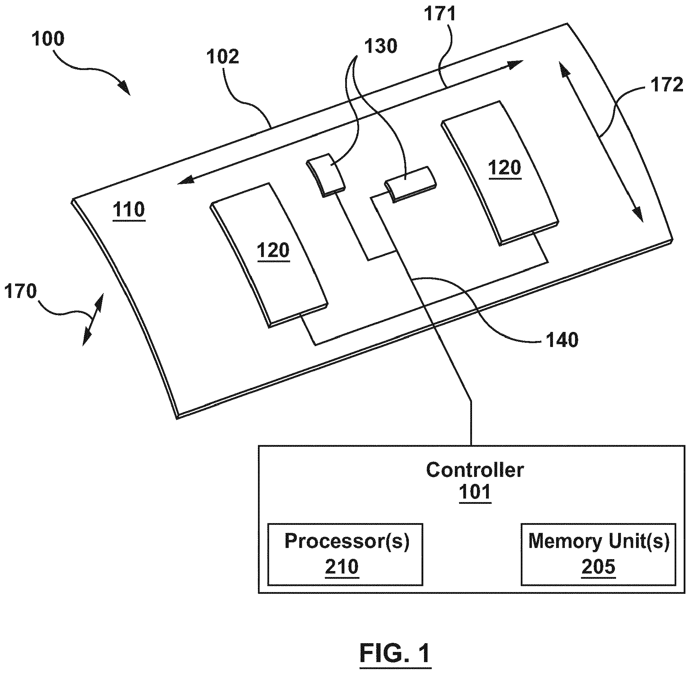

FIG. 1 illustrates a system 100 configured to facilitate user interaction with a variable curvature interactive device 102. The system 100 includes at least a controller 101 and a variable curvature interactive device 102. The variable curvature interactive device 102 includes a panel 110, one or more actuators 120, one or more sensors 130, and one or more circuits 140. In embodiments, the variable curvature interactive device 102 may include additional or fewer components than those described above, as discussed in greater detail below.

The panel 110 is substantially flat and has a depth dimension 170 significantly less than its length dimension 171 and width dimension 172. The width dimension 172, length dimension 171, and depth dimension 170 are orthogonal to one another. The panel 110 may be rectangular, square, oval, elliptical, trapezoidal, or any other shape suitable for the uses described herein. In embodiments, the panel 110 is generally rectangular with rounded corners. The panel 110 is constructed of one or more materials. The panel 110 may be constructed of a single material, such as aluminum, steel, carbon fiber, plastic, or any other suitable material. In further embodiments, the panel 110 may be constructed of multiple materials. When constructed of multiple materials, the panel 110 may have a layered structure wherein each material extends over substantially the entire length and width of the panel 110 and/or may have a non-uniform structure, wherein multiple materials extend across various portions of the length and width of the panel 110. For example, a non-uniform structure may include a base panel made of one material with ribs of another material extending across it. In another example, a non-uniform structure may include a base panel made of one material with a border of another material surrounding it. The panel 110 may be constructed so as to be isotropic in material properties, such as stiffness, or may be constructed to be anisotropic in one or more material properties along one or more dimensions. The panel 110 is constructed so as to respond to bending deformations substantially elastically, by returning to its original shape.

One or more actuators 120 are disposed on the panel 110. The actuators 120 may be attached to the panel 110 in any suitable fashion, including by adhesive, mechanical attachments such as screws or staples, welding, bonding, and/or any other method. The actuators 120 may be directly attached to the panel 110 or indirectly attached to the panel 110. As used herein, direct attachment to the panel 110 of the actuators 120 refers to an attachment that includes no intervening materials, objects, or elements between the actuator 120 and the panel 110 excepting those required for attachment. For example, an actuator 120 bonded to the panel 110 via welding or via an adhesive is directly attached the panel 110. As used herein, indirect attachment to the panel 110 of the actuators 120 refers to an attachment that includes intervening materials, objects, or elements between the actuator 120 and the panel 110 that are not required to facilitate attachment of the actuator 120 to the panel 110. For example, an actuator 120 that is raised from the panel 110 at either end by a mounting pedestal between the actuator 120 and the panel 110 is indirectly attached to the panel 110.

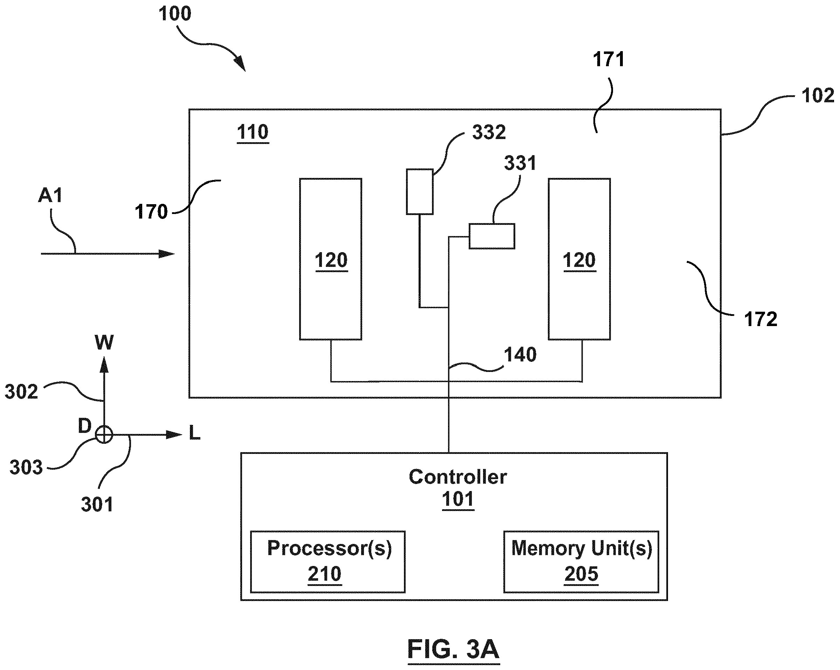

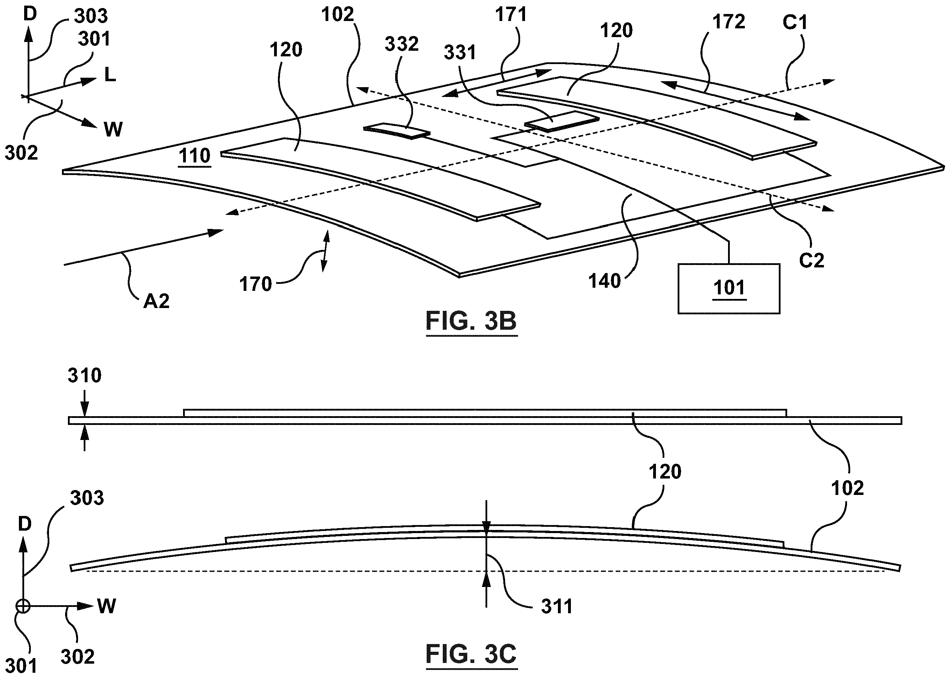

The actuators 120 may be macro fiber composite (MFC) actuators, smart material actuators, such as electroactive polymer actuators, and/or shape memory material actuators configured to force the panel 110 to bend when activated. The actuators 120 are configured for contraction, expansion, or both, depending on an activation control signal received. The expansion or contraction of the actuators 120 provides a bending force on the panel 110 to which the actuators 120 are attached. The bending force causes a change in curvature of the panel 110. Changes in the curvature of the panel 110 provide haptic effects to a user according to the operation of the actuators 120, which is discussed in greater detail below with respect to FIG. 3.

One or more sensors 130 are disposed on the panel 110. The one or more sensors 130 are configured to detect, determine, or otherwise sense properties of the panel 110. The sensors 130 may be configured to determine strain, force, displacement, and/or curvature of the panel 110. In such an embodiment, the sensors 130 may include strain gauges, piezoelectric sensors, and any other suitable sensor. The sensors 130 may also be configured to determine acceleration or other motion characteristics of the panel 110. In such an embodiment, the sensors 130 may include accelerometers or other suitable motion detection sensors.

One or more circuits 140 are disposed on the panel 110. The circuits 140 are configured to electrically couple the actuators 120 and/or the sensors 130 to each other and/or to the controller 101, which may be disposed on the panel 110 or remotely located from the panel 110. The circuits 140 are configured to electrically couple the actuators 120, sensors 130, and the controller 101, i.e., the coupled components, in wired or wireless fashion. The circuit 140 may thus include wires and circuit components suitable for facilitating the conduction of signals between the coupled components. Circuit components may include resistors, capacitors, inductors, operational amplifiers, transistors, transformers, and other components that may be required to transfer a signal between the coupled components. In further embodiments, the circuit 140 may include wires, circuit components, and antennas suitable for facilitating the conduction of signals wirelessly between the coupled components.

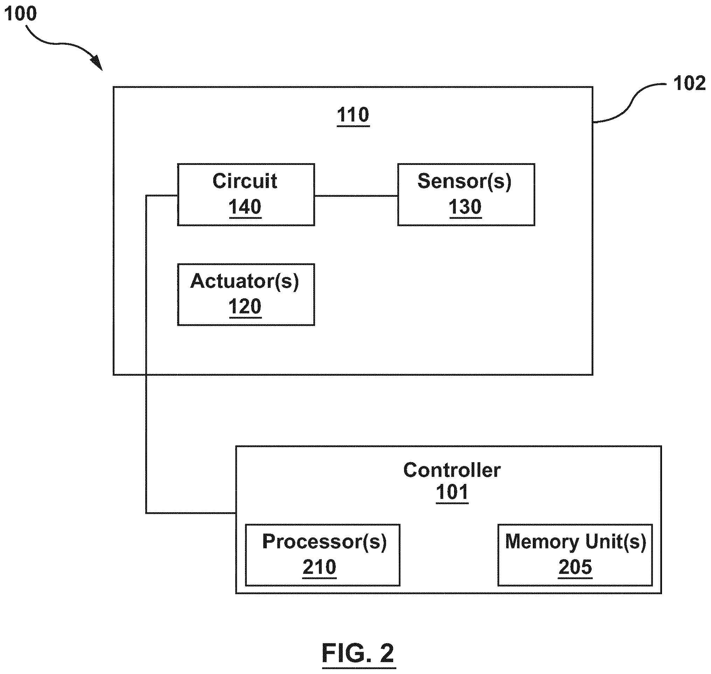

The controller 101 of the system 100 includes one or more processors 210 and one or more non-transient computer memory units 205, as described in greater detail below with respect to FIG. 2. The controller 101 is electrically coupled, in wired or wireless fashion, to the actuators 120 and sensors 130 of the variable curvature interactive device 102. The controller 101 is configured to control activation of the actuators 120 via an activation control signal transmitted or otherwise sent to the actuators 120 via the circuit 140. The controller 101 is further configured to receive input from the sensors 130, the input from the sensors including information about detected, measured, or otherwise sensed properties of the panel 110. In some embodiments, the controller 101 is further configured to receive input from the actuators 120.

FIG. 2 is a schematic illustration of a system for the dynamic stiffness modification of an interactive device. The system 100 includes a variable curvature interactive device 102 including a panel 110, one or more actuators 120, one or more sensors 130, and a circuit 140. The system 100 further includes a controller 101 including one or more processors 210 and one or more computer memory units 205. The circuit 140 is configured to electrically couple the controller 101 to the actuators 120 and the sensors 130, in wired or wireless fashion. As discussed above, the system 100 is not limited to the structure and composition illustrated in FIG. 1. In particular, the additional or fewer actuators 120 and/or sensors 130 may be employed, and a panel 110 of different dimensions or shape may be employed.

The controller 101 may be configured as a server (e.g., having one or more server blades, processors, etc.), a personal computer (e.g., a desktop computer, a laptop computer, etc.), a smartphone, a tablet computing device, a gaming console, a VR headset, and/or other device that can be programmed to receive and encode haptic effects.

The processor(s) 210 are programmed by one or more computer program instruction stored in the memory unit(s) 205. The one or more processors 210 and the one or more memory units 205 may be referred to herein as simply "the processor 210" and "the memory unit 205," respectively. The functionality of the processor 210, as described herein, is implemented by software stored in the memory unit 205 or another computer-readable or tangible medium and executed by the processor 210. As used herein, for convenience, the various instructions may be described as performing an operation, when, in fact, the various instructions program the processors 210 to perform the operation. In other embodiments, the functionality of the processor may be performed by hardware (e.g., through the use of an application specific integrated circuit ("ASIC"), a programmable gate array ("PGA"), a field programmable gate array ("FPGA"), etc.), or any combination of hardware and software.

The various instructions described herein may be stored in the memory unit 205, which may include random access memory (RAM), read only memory (ROM), flash memory, and/or any other memory suitable for storing software instructions. The memory unit 205 stores the computer program instructions (e.g., the aforementioned instructions) to be executed by the processor 210 as well as data that may be manipulated by the processor 210.

The processor 210 is configured to transmit or send an activation control signal to the variable curvature interactive device 102 and/or to the one or more actuators 120 of the variable curvature interactive device 102. The activation control signal is configured to cause activation of the actuators 120, as described in greater detail below. The activation control signal is generated by the processor 210 to achieve specific haptic effects on the panel 110, as described further below. The activation control signal may include multiple signals sent individually to each of a plurality of actuators 120 or a single signal that is routed collectively to all of a plurality of actuators 120. In further embodiments, the processor 210 may send different activation control signals to each of a plurality of actuators 120.

The activation control signal is generated by the processor 210 according to parameters of a software application with which a user of the variable curvature interactive device 102 is interacting. Variable curvature interactive devices 102 consistent with embodiments hereof are configured to provide haptic effects to a user through curvature changes in the variable curvature interactive device. Such haptic effects include, for example, resistance to bending, vibration effects, and/or kinesthetic movement of the variable curvature interactive device 102, as described in more detail below. The haptic effects are provided to enhance the experience of a user employing the variable curvature interactive device 102 to interact with a software application, such as a game or productivity application. The processor 210 interacts with a computer system running software applications with which a user is interacting. In some embodiments, the processor 210 may be an aspect of the computer system running the software applications with which the user is interacting. The processor 210 generates activation control signals based on processing of one or more software applications with which a user interacts.

In embodiments, the processor 210 may be configured to receive user input signals from the sensors 130 and/or the actuators 120 of the variable curvature interactive device 102. Such user input signals may be used, in specific embodiments, in addition to or instead of software application parameters for generating activation control signals to provide haptic effects via the variable curvature interactive device 102. In embodiments, the processor 210 is further configured to generate the activation control signal at least partially in response to data or information provided by the sensors 130 and/or the actuators 120. The sensors 130 may optionally be included in any embodiment of the variable curvature interactive devices 102 discussed herein. The output of the sensors 130 and/or the actuators 120 may be transmitted to and used by the processor 210 as feedback in a control system, such as a closed loop control system for controlling the variable curvature interactive device 102. In further embodiments, the sensors 130 located remotely or provided separately from the variable curvature interactive device 102 may be configured to transmit information to the processor 210 for facilitating control of the actuators 120.

FIGS. 3A-3C illustrate a variable curvature interactive device consistent with embodiments hereof. FIG. 3A illustrates a variable curvature interactive device 102 including the panel 110, one or more actuators 120, one or more sensors 331, 332 and the circuit 140. The variable curvature interactive device 102 is connected to the controller 101 including the processor 210 and the memory unit 205 to form the system 100 for dynamic stiffness modification of the interactive device. FIG. 3A also illustrates a length axis 301, a width axis 302, and a depth axis 303 of the variable curvature interactive device 102. The panel 110 has a length dimension 171 coinciding with the length axis 301, a width dimension 172 coinciding with the width axis 302, and a depth dimension 170 coinciding with the depth axis 303. The length dimension 171 and the width dimension 172 define a plane of the panel 110. The actuators 120 are disposed on the panel 110 and are configured to provide a bending force to the substrate in the direction of the width dimension 172 when activated. FIG. 3A illustrates the variable curvature interactive device 102 in a flat, unbent state where the actuators 120 are not activated to apply the bending force to the panel 110.

FIG. 3B is an isometric view illustrating the variable curvature interactive device 102 in a bent or curved state where the actuators 120 are activated to apply a bending force to the panel 110. The circuit 140 supplies an activation control signal to the actuators 120 to cause their activation. The activation of the actuators 120 causes the actuators 120 to provide a bending force to the panel 110 in the direction of the width dimension 172 of the panel 110. The bending force induces a curvature in the panel 110 in the direction of the width dimension 172 and the induced curvature causes haptic effects to be output to a user.

In embodiments the haptic effect output to the user by the curvature of the panel 110 is an increase in the stiffness or resistance to bending of the panel 110. Curvature in the direction of the width dimension 172 causes an increase in the stiffness of the panel 110 and thus a resistance to bending in the direction of the length dimension 171. A user interacting with the variable curvature interactive device 102 by bending the device 102 feels the increase in resistance as feedback from a software application with which they are interacting. Haptic effects may also be caused by a reduction in the curvature of the panel 110 resulting in a reduction in the stiffness of the panel 110. Accordingly, the activation control signal of the controller 101 may modify the curvature of the panel 110. As used herein, modifying the curvature refers to inducing a curvature, to increasing a curvature, or reducing a curvature.

Increasing the curvature of the panel 110 in the width dimension 172 causes an increase in the area moment of inertia or second moment of area of the panel 110. The bending stiffness of a beam such as panel 110 is a function of the area moment of inertia and the material stiffness (Youngs modulus). Increases in the area moment of inertia result in increases in bending stiffness. Generally, the area moment of inertia of a beam is larger where more of the beam's cross-sectional area is located away from the centerline of the beam. Although equations for the area moment of inertia differ depending on the cross-sectional shape of the beam, total values of the area moment of inertia generally scale according to the fourth power of the height of the beam cross section. FIG. 3C provides an end view of the panel 110 in its flat and curved states, in the direction of arrows A1 and A2 shown in FIGS. 3A and 3B, respectively. In a flat state, an area moment of inertia of the panel 110 is relatively small, as an effective depth 310 of an imaginary beam formed by the panel 110 is the same as a depth of the panel 110. In a curved state, the area moment of inertia of the panel is relatively larger, as portions of the cross-sectional area extend further away from a centerline of the imaginary beam formed by the curved panel 110, which causes an increase in an effective depth 311 of the imaginary beam.

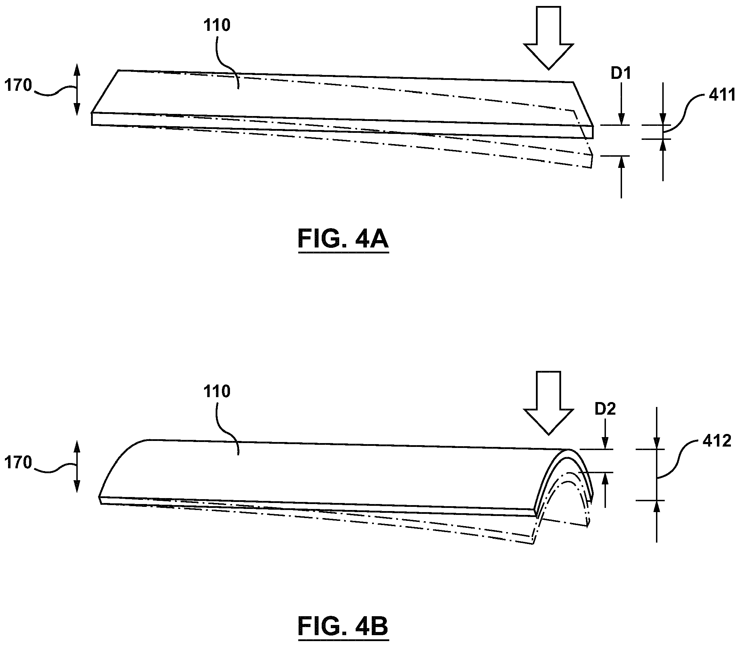

The effects of increased curvature in a beam such as the panel 110 are illustrated in FIGS. 4A and 4B. FIG. 4A illustrates the panel 110 arranged as a cantilevered beam with a force applied to the end. In FIG. 4A, the effective depth 411 of the panel 110 is equal to the length of the depth dimension 170 of the panel. Due to the force, the displacement of the end of the panel 110 is D1. FIG. 4B illustrates panel 110 arranged as a cantilevered beam after an increase in curvature. In FIG. 4B, the effective depth 412 of the panel 110 is several times greater than the length of the depth dimension 170 of the panel. The same force applied to the end of the curved panel 110 induces a displacement of D2. The displacement D2 induced in the curved panel 110 is less than the displacement D1 induced in the flat panel 110. Accordingly, the bending stiffness of the beam is increased by the induced curvature.

With reference to FIGS. 3A-3C, the sensors 130 of the variable curvature interactive device 102 may include a length dimension sensor 331 and a width dimension sensor 332. The length dimension sensor 331 is configured to determine a curvature of the panel 110 in a direction of the length dimension 171 and the width dimension sensor 332 is configured to determine a curvature of the panel 110 in a direction of the width dimension 172. As used herein, a width dimension curvature is a curvature in a direction of the width dimension 172 and refers to a configuration wherein the panel 110 is curved about a centerline C1 that is parallel with the length dimension 171. Similarly, a length dimension curvature is a curvature in a direction of the length dimension 171 and refers to a configuration wherein the panel 110 is curved about a centerline C2 that is parallel with the width dimension 172. As used herein, centerline refers to the imaginary line running through the panel 110 about which the panel 110 is curved. It is not necessary for the centerline to run through the middle of the panel 110, and the panel 110 may be curved about a centerline offset from the middle of the panel 110. FIG. 3B, for example, illustrates a curvature in the direction of the width dimension 172. FIGS. 3B and 3C each illustrate a panel with a noticeable amount of curvature. Curvature consistent with embodiments herein may also be significantly smaller, nearly imperceptible to observation.

In operation, the controller 101 supplies an activation control signal to the actuators 102 to cause the actuators to provide a bending force to the panel 110 for changing the curvature of the panel 110. The controller 101 is configured to adjust the activation control signal in various ways to provide specific haptic effects as outputs.

In an embodiment, the controller 101 is configured to provide a haptic effect of varying the stiffness or resistance to bending of the panel 110. To achieve this haptic effect, the controller 110 is configured to alter the activation control signal to continuously adjust the curvature of the panel 110. In accordance with embodiments hereof, rather than sending an activation control signal inducing constant curvature in the panel 110, the controller 101 alters the activation control signal to provide continuous adjustments in the curvature of the panel 110, and thus cause dynamic or continuous adjustment of the stiffness of the panel 110. The controller 101 may be configured to make such dynamic adjustments according to a software application with which a user of the variable curvature interactive device 102 is interacting.

In an embodiment, the controller 101 is configured to output a haptic effect providing a constant stiffness of the panel 110. To achieve this haptic effect, the controller 110 is configured to adjust the activation signal according to a width dimension curvature input received from the width dimension sensor 332. The controller 101 is configured to receive the width dimension curvature input from the width dimension sensor 332. The width dimension curvature input includes data determined by the width dimension sensor 332 indicative of a level of the width dimension curvature of the panel 110. Such data may be determined, for example, by a strain gauge or other sensor type. In response to the width dimension curvature input, the controller 101 adjusts the activation control signal so as to maintain a desired curvature, and therefore a desired stiffness, of the panel 110. In embodiments, the adjustments of the activation control signal may be made based on closed loop feedback control methods.

In an embodiment, the controller 101 is configured to receive user inputs based on bending of the panel 110. To receive such inputs, the controller 101 is configured to receive a length dimension curvature input from the length dimension sensor 331 and to provide the length dimension curvature input to a software application as a user input. The length dimension curvature input includes data determined by the length dimension sensor 331 indicative of a level of the length dimension curvature of the panel 110. Such data may be determined, for example, by a strain gauge or other sensor type. In response to the length dimension curvature input, the controller 101 may generate a user input based on the length dimension curvature input and transmit or send the user input to a software application with which a user is interacting.

The controller 101 is also configured to receive a width dimension curvature input from the width dimension sensor 332 as a user input to a software application. The controller 101 may further be configured to compare an expected curvature based on the activation control signal with a measured width dimension curvature input to determine what proportion of the width dimension curvature is due to the user input and what proportion is due to curvature caused by the bending force of the actuators 120.

In further embodiments, the controller 101 is configured to cause the output of a haptic effect in the form of a kinesthetic movement of the panel 110. To cause such outputs, the controller 101 is configured to provide an activation control signal to activate the actuators 120 to cause a rapid change in curvature of the panel 110, either bending or unbending. Such a rapid curvature change may be felt by the user as a jerking or twitching movement of the variable curvature interactive device 102. The magnitude of the activation control signal may be varied to adjust the speed of the kinesthetic movement effect induced in the variable curvature interactive device 102.

In further embodiments, the controller 101 is configured to cause the output of a haptic effect in the form of a vibration haptic effect. To achieve a vibration haptic effect, the controller 101 is configured to cause the activation of the actuators 120 via an oscillating activation control signal. An oscillating activation control signal supplied to the actuators 120 causes the actuators to vibrate the panel 110 at a frequency consistent with that of the oscillating activation control signal. Provided with an oscillating activation control signal, the panel 110 may alter between increasing and decreasing curvature in the same direction or may alter between curvature in one direction and curvature in the opposite direction. The magnitude and frequency of the induced vibrations may be varied by variation of the magnitude and frequency of the activation control signal. In embodiments, an activation control signal having multiple frequencies may be provided by the controller 101 to the actuators 120, thus producing a high definition vibration haptic effect in the panel 110.

In embodiments, the controller 101 may be configured to activate the actuators 120 with an activation control signal to provide any combination of the above described haptic effects, including stiffening, vibration, and kinesthetic effects simultaneously. For example, the actuators 120 may be activated by a first activation control signal to cause bending of the variable curvature interactive device 102 to increase its stiffness. An additional activation control signal may be combined with or overlaid on the first activation control signal to cause the actuators 120 to provide a vibration effect or kinesthetic movement effect in addition to the bending force. Any combination of effects may be provided by the actuators 120.

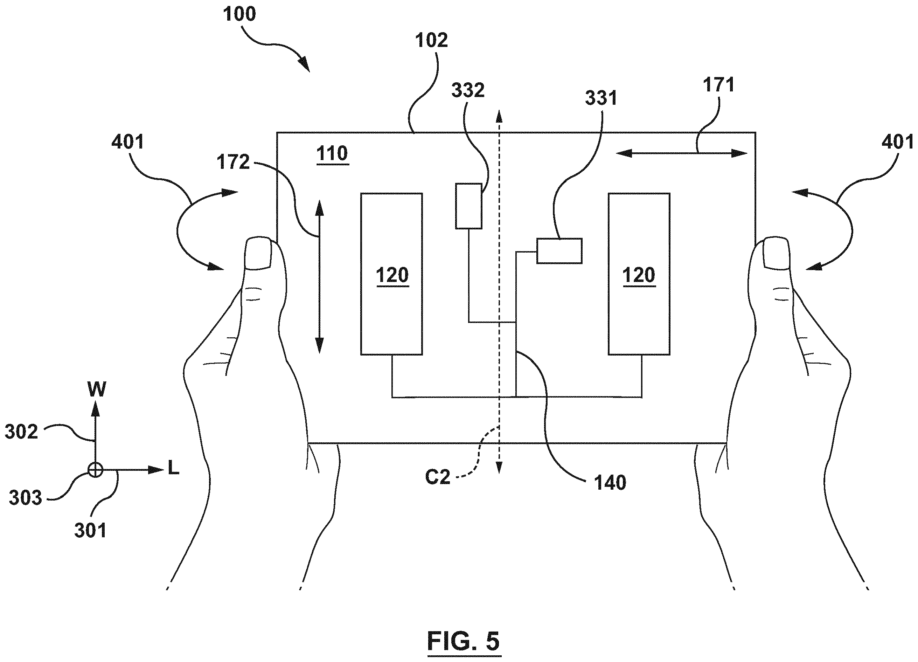

FIG. 5 illustrates the use of the variable curvature interactive device 102 as a user interactive input/output device. The controller 101, as discussed above, selectively activates the actuators 120 to adjust the width dimension curvature to provide haptic effects to the user in the form of modified stiffness effects, vibration haptic effects, and kinesthetic movement effects. The user, holding the variable curvature interactive device 102 in one hand or two, applies bending force or pressure to the panel 110 to cause length dimension curvature about the centerline C2, as indicated by arrows 401. Curvature of the panel 110 about the centerline C2, which is caused by the user applying the bending pressure, is measured by the length dimension sensor 331 and interpreted by the controller 101 as a user input. The user may apply bending pressure in either direction of the arrows 401 as an input to a software application. In further embodiments, width dimension curvature inputs to the controller 101 from the width dimension sensor 332 may also be interpreted as user inputs. Accordingly, the user may twist and/or bend the variable curvature interactive device 102 in any fashion and the combination of length dimension curvature inputs and width dimension curvature inputs from the length dimension sensor 331 and width dimension sensor 332, respectively, provide a range of user input.

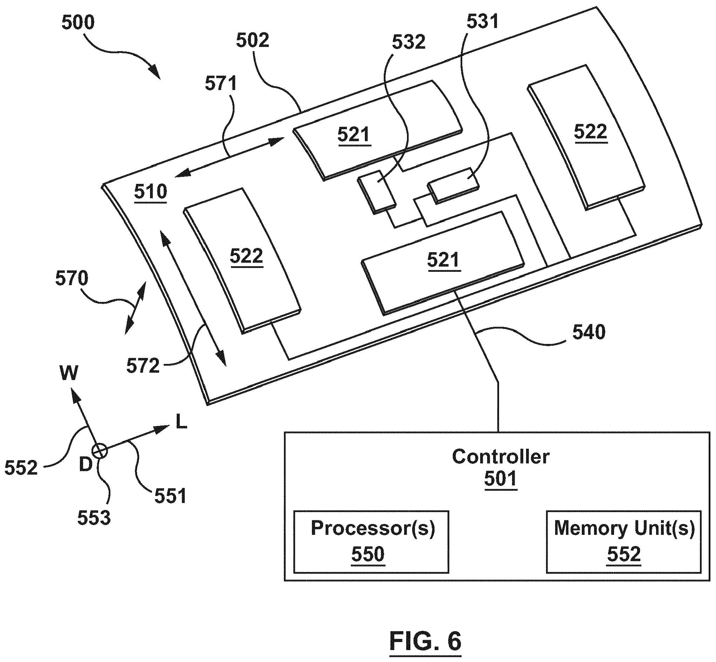

FIG. 6 illustrates a system 500 configured for modifying the curvature of a variable curvature interactive device 502 configured for multi-dimension curvature modification. The system 500 and variable curvature interactive device 502 are configured for curvature modification in two or more dimensions. The system 500 and variable curvature interactive device 502, and their component parts, include all of the functionality described above with respect to the system 100 and the variable curvature interactive device 102. The system 500 and the variable curvature interactive device 502 further include components and capabilities for modifying the stiffness of the variable curvature interactive device 502 along more than one dimension. Accordingly, in addition to the actuators 120 of the variable curvature interactive device 102 configured to provide a bending force along a single dimension, the variable curvature interactive device 502 includes actuators configured to provide bending forces along multiple dimensions, as discussed below.

The system 500 includes at least a controller 501 and a variable curvature interactive device 502. The variable curvature interactive device 502 includes a panel 510 having a depth dimension 570, a length dimension 571, and a width dimension 572. The depth dimension 570, length dimension 571, and width dimension 572 correspond in direction to the depth axis 553, length axis 551, and width axis 552, respectively. The panel further includes one or more length dimension actuators 521, one or more width dimension actuators 522, one or more width dimension sensors 531, one or more length dimension sensors 532, and one or more circuits 540. In embodiments, the variable curvature interactive device 502 may include additional or fewer components than those described above, as discussed in greater detail below. The panel 510 is configured similarly to the panel 110 and includes all of the functionality of panel 110 as described herein.

The variable curvature interactive device 502 includes one or more length dimension actuators 521 and one or more width dimension actuators 522. The length dimension actuators 521 are arranged along the length dimension 551 and the width dimension actuators 522 are arranged along the width dimension 552. Accordingly, length dimension actuators 521 and the width dimension actuators 522 are arranged perpendicularly to one another. When activated by a control signal, the width dimension actuators 522 cause a width dimension bending force along the width dimension 172 of the panel 510. The bending force along the width dimension 172 causes the panel 510 to curve in the width dimension 172 about a centerline C1 parallel to the length dimension 171. The increase in curvature along the width dimension 172 causes an increase in stiffness in the length dimension 171. When activated by an activation control signal, the length dimension actuators 521 cause a length dimension bending force along the length dimension 171 of the panel 510. The bending force along the length dimension 171 causes the panel to curve in the length dimension 171 about a centerline C2 parallel to the width dimension 172. The increase in curvature along the length dimension 171 causes an increase in stiffness in the width dimension 172. Accordingly, the controller 501 sends activation control signals to modify the curvature of the panel 510 in the width dimension 172 and the length dimension 171.

The arrangement of the length dimension actuators 521 and the width dimension actuators 522 to provide bending forces perpendicular to one another is an example only. In further embodiments, a variable curvature interactive device may be provided with multiple actuators arranged to provide bending forces along different dimensions. For example, a variable curvature interactive device may include one set of actuators arranged to provide a bending force at a 45 degree angle to the width dimension and another set of actuators arranged to provide a bending force perpendicularly to the first set. In further embodiments, multiple actuators may be arranged to provide bending forces along dimensions that are not perpendicular to one another.

The controller 501, including at least one processor 550 and at least one computer memory unit 552, is configured similarly to the controller 101 as discussed above. The controller 501, processor 550, and memory unit 552 include all of the functionality of controller 101, processor 210, and memory unit 205, respectively. Additionally, the controller 501, and therefore the processor 550 and memory unit 552, are configured to provide activation control signals to both the one or more length dimension actuators 521 and the one or more width dimension actuators 522. In further embodiments including actuators arranged along two or more axes, the controller 501 is configured to provide appropriate activation control signals to control such actuators. Activation control signals provided by the controller 501 to the panel 510 cause curvature modifications that provide haptic effects, such as modified stiffness or resistance to bending along multiple dimensions, vibration haptic effects, and kinesthetic movement haptic effects along multiple dimensions.

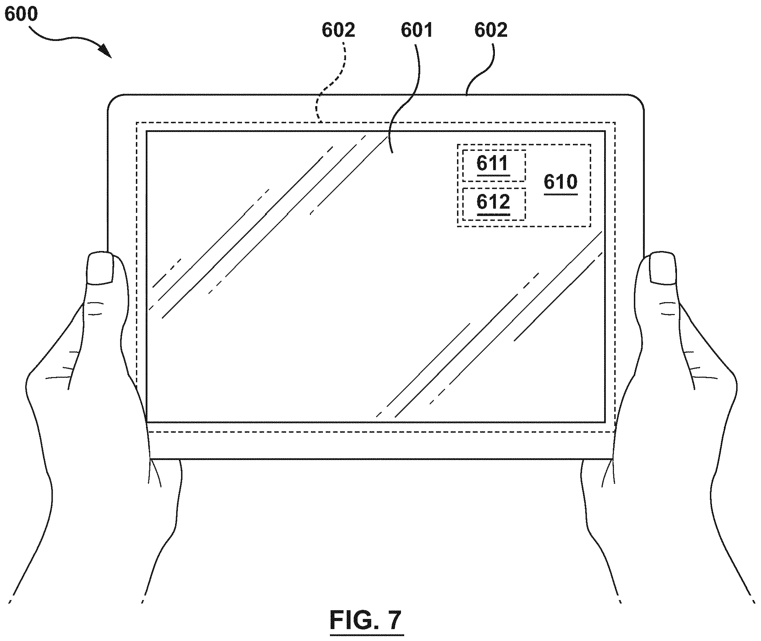

FIG. 7 illustrates a user device incorporating a variable curvature interactive device according to embodiments. FIG. 7 depicts a user display device 600 that incorporates at least a display screen 601, a housing 603, and variable curvature interactive device 602. The variable curvature interactive device 602 may be or may include all of the same components and functionality as described herein with respect to variable curvature interactive devices 102, 502. The user display device 600 may be configured as a smartphone, tablet, phablet, laptop computer, television, gaming controller, and/or any other type of user device including a display screen 601. The display screen 601 is configured to provide a visual display to the user. The user display device 600 may further include devices with flexible screens specifically designed for use with the variable curvature interactive device 602. The user display device 600 further includes a controller 610 including a processor 611 and a memory unit 612 and additional components necessary to operate as a user device. The controller 610 may be or may include all of the same components and functionality of controllers 101, 501. The user display device 600 is configured to run software applications, display and output multi-media files, perform communication tasks, and perform all other tasks typical of such devices.

In embodiments, the display screen 601 and the housing 602 are flexible, configured to flex or bend when a user applies a bending pressure. The display screen 601 may be a touch or pressure sensitive display screen, and the housing 602 may include one or more user input buttons, pads, sensors, etc. The variable curvature interactive device 602 of the user display device 600 provides haptic effects to the user display device 600 through curvature modifications. The flexible display screen 601 and the flexible housing 602 permit the user display device 600 to bend. The variable curvature interactive device 602, when activated via an activation control signal, modifies the curvature of the user display device 600 to provide haptic effects, such as stiffness modifications, vibration haptic effects, and kinesthetic movement effects, as discussed above with respect to the variable curvature interactive device 102. In further embodiments, as discussed above, the variable curvature interactive device 602 may act to receive inputs from a user in the form of bending inputs.

For example, the user display device 600 may be configured to alter its curvature to provide haptic effects to a user related to operation of the user display device 600. The user may also provide input via a bending action, which may be counteracted or resisted by modifications of the stiffness of the variable curvature interactive device 602. Bending action inputs can be quantified by direction of bending, magnitude of bending force applied, and speed of force application. Such inputs may be used by a software application, for example, to scroll through a list, adjust a volume level, scrub through a video, where the speed or location in the list, level or video may be adjusted based on a magnitude of the bending force applied. In other embodiments, a quick or rapid bending movement may be interpreted as a button press or click. The variable curvature interactive device 602 employed with the user display device 600 may have modifiable stiffness in a single dimension such as a variable curvature interactive device 102 and/or modifiable stiffness in multiple dimensions, such as variable curvature interactive device 502. The variable curvature interactive device 602 employed with the user display device 600 may be configured to receive bending action inputs along any dimension, as implemented by the various sensors positioned on the panel of the variable curvature interactive device.

Use of bending action inputs may be advantageous because they do not require a user to reposition their hands to provide input. A common position for use of a user display device 600 requires the user's hands to be placed on either side of the device with both thumbs on the display side of the device and the fingers curling behind the device. This position permits a maximum amount of screen real estate to be visible to a user. In such a position, inputs to a traditional touchscreen may be limited according to the range of motion of the user's thumbs and moving one hand to use a finger or thumb on the screen serves to obscure the user's view. The addition of bending action inputs permits the user a wider range of interactive possibilities and mechanics for interacting with any type of software application that is in operation on the user display device 600.

All previously described features of the variable curvature interactive device 102 and the variable curvature interactive device 502 may be employed within the context of a user display device 600. In further embodiments of a user display device 600, the housing 601 is either optional and/or minimal in nature. That is, the user display device 600 may include a display 601 bonded or otherwise attached to a variable curvature interactive device 102, 502 with only minimal additional structural elements.

Deployment within the user display device 600 represents an example usage of the variable curvature interactive devices described herein. The variable curvature interactive devices described herein are not, however, limited to such user display devices and may be employed as or part of an interactive user device in any appropriate further embodiment without departing from the scope of the invention. In an embodiment, a variable curvature interactive device may be part of a cuff or bracelet, where the variable curvature interactive device can provide the vibration of force feedback to the user. The user may interact with the bracelet to access information in an associated digital device where the stiffness of the bracelet is, for example, proportional to the amount of emails, or messages received. The bracelet may also be used to input information when the bracelet has a visual display. Physical manipulation of the bracelet, such as by bending the sides of the bracelet, may permit interaction with a visual display of the bracelet. For example, a cursor in the visual display can be activated and a list can be manipulated. Similarly, variable curvature interactive devices may be part of a worn device like a shirt or jacket, for example. Variable curvature interactive device may be embedded in the sleeve or near a zipper and the user may interact with the variable curvature interactive device and receive, via changes to the shape or stiffness of the variable curvature interactive device, information transmitted from a connected device, such as a smart watch of cellphone.

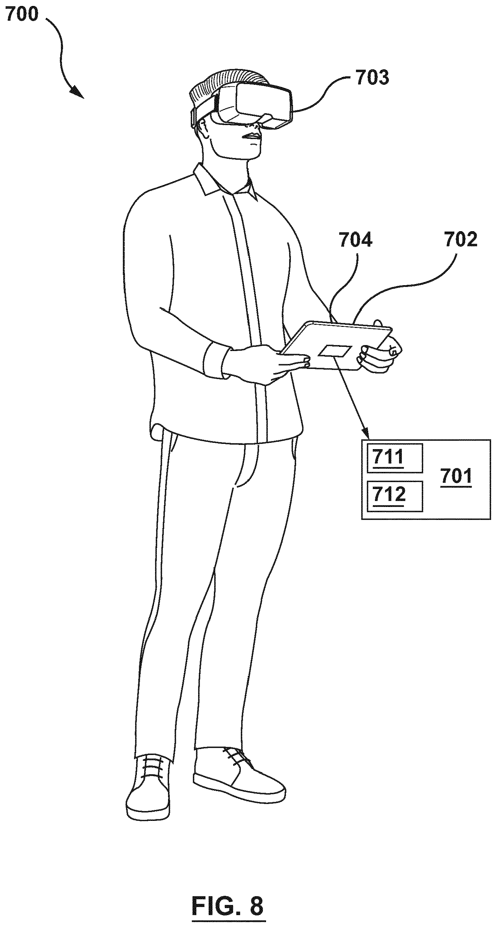

FIG. 8 illustrates an immersive reality system 700 incorporating a variable curvature interactive device 702, a controller 701, and an immersive reality display device 703. The variable curvature interactive device 702 includes all of the features and functionality of the variable curvature interactive devices 102, 502, 602. The variable curvature interactive device 702 optionally further includes a touch-sensitive surface 704. The controller 701, including a processor 711 and a memory unit 712, includes all of the functionality described with respect to the controllers 101, 501, 601 and additional features and functionality as required to operate within the immersive reality system 700. The immersive reality display device 703 is a display device configured to provide a user with an immersive reality display. The immersive reality display device 703 may be a head mounted display, goggles, glasses, contact lens, helmet, projection device, and/or a device configured to project images to a user's retina.

A display screen is optional but not required in the variable curvature interactive device 702 because the immersive reality display device 703 may provide all of the display requirements for the immersive reality system 700. In augmented or mixed reality versions of the immersive reality system 700, the immersive reality display device 703 may permit the user to continue viewing aspects of the real world. In such embodiments, including a display screen in the variable curvature interactive device 702 may be advantageous. In fully immersive embodiments of the immersive reality system 700 that do not permit a user to see any aspects of the real world, a display screen on the variable curvature interactive device 702 may still be implemented, for example, to facilitate control of the system 700 when the immersive reality display device 703 is not worn and/or to provide interaction with nearby people that cannot interact directly with the immersive environment of the immersive reality system 700.

In embodiments, the immersive reality display system 700 includes additional sensors to detect, identify, or otherwise sense user input. The sensors may be configured to detect position, location, and/or movement (i.e., displacement, vibration, acceleration, etc.) of the variable curvature interactive device 702. The sensors may further be configured to detect or identify the motion, position, location, and/or movement of a user's hands or figures with respect to the variable curvature interactive device 702. For example, sensors configured to detect movement aspects of the variable curvature interactive device 702 may include accelerometers or other sensors mounted on the variable curvature interactive device 702 and may also include non-contact based motion sensors, such as cameras, lasers, or other sensors that can detect properties of the variable curvature interactive device 102 remotely. Other sensors may include devices configured to detect movement of the user's fingers or hands. Such sensors may be incorporated in wearable devices, for example, and may also include non-contact sensors, such as cameras, lasers, and others.

The information determined by the sensor may be used as input to the immersive reality system 700 and any immersive reality applications or operations provided by the immersive reality system 700. In an embodiment, the immersive reality display device 703 provides a user with an augmented or fully immersive display that causes the user to see a virtual display on the variable curvature interactive device 702. The user may interact with the virtual display on the variable curvature interactive device 702, for example, by drawing, clicking, writing, etc., and the user's movements may be detected by the sensors as input to the immersive reality system 700. Thus, even though, in this embodiment, the variable curvature interactive device 702 lacks a touchscreen or display, the user may still interact with it as if it includes both.

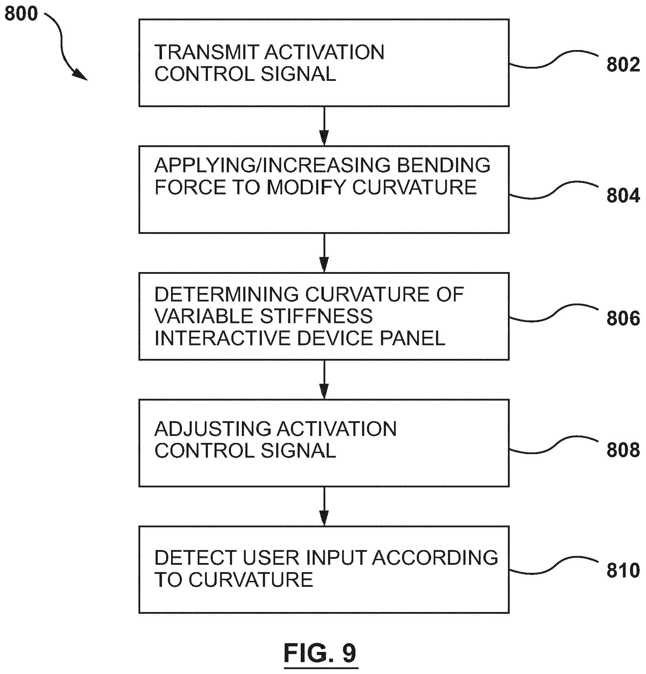

FIG. 9 is a flow diagram illustrating a curvature modification process 800 of modifying the curvature of a variable curvature interactive device to provide haptic effects. The process 800 may be performed via any of the variable curvature interactive devices disclosed herein, including those in which a variable curvature interactive device panel is encased or enclosed in a housing, and associated components described herein using any combination of features, as may be required for the various operations of the process. The variable curvature interactive devices used by the process 800 may include any variable curvature interactive device consistent with embodiments described herein, including the variable curvature interactive devices 102, 502, 602, 702. The curvature modification process 800 may be carried out with more or fewer of the described operations, in any order.

In an operation 802, the curvature modification process 800 includes transmitting an activation control signal to a variable curvature interactive device. A processor or processors associated with the variable curvature interactive device generates and transmits, via appropriate circuitry, one or more activation control signals to the variable curvature interactive device. The activation control signal may include multiple activation control signals sent by the processor and received by each actuator of the variable curvature interactive device individually and/or may be a single activation control signal sent by the processor and routed to the individual actuators of the variable curvature interactive device. The activation control signal or signals generated by the processor are generated to cause a specific effect, e.g., to modify the stiffness of the variable curvature interactive device, to output a vibration haptic effect, and/or to provide a kinesthetic movement effect. Activation control signals may also be configured to provide a combination of multiple effects, such as inducing both stiffness modifications and vibration.

In an operation 804, the curvature modification process 800 includes applying or increasing bending force to the variable curvature interactive device panel by one or more actuators. The actuators generate or apply the bending force in response to the activation control signal. Bending force may be applied according to a type of actuator. For example, actuators configured to expand or contract in response to an activation control signal, such as, for example, MFC actuators, may impart a bending force to the variable curvature interactive device panel by expanding and/or contracting. Other types of actuators, such as electroactive polymer actuators, may be configured to curve or bend in response to an activation control signal, and thus impart a bending force through bending or curving. The amount of bending force applied to the variable curvature interactive device panel may vary according to the magnitude or other properties of the activation control signal.

The change in curvature of the variable curvature interactive device panel induced by the actuators causes the output of haptic effects, in the form of stiffness modifications, vibration haptic effects, and/or kinesthetic movement effects. The actuators may be configured to apply a bending force in a direction of any dimension of the variable curvature interactive device panel, and thus alter the curvature of the variable curvature interactive device panel in a direction of any dimension, depending on the actuator arrangement.

In an operation 806, the curvature modification process 800 optionally includes determining a curvature of the variable curvature interactive device panel by one or more sensors disposed on the variable curvature interactive device panel. Sensors, including, for example, bend sensors, strain gauges, and others, are disposed on the variable curvature interactive device panel and configured to determine the curvature of the panel. The panel curvature, as determined by the one or more sensors, may be transmitted or otherwise sent to the processor via the circuitry for interpretation, analysis, and control.

In an operation 808, the curvature process 800 optionally includes adjusting the activation control signal according to the curvature of the panel as determined by the one or more sensors. The processor, which may receive panel curvature information from the one or more sensors, is configured to use the panel curvature information to adjust the activation control signal. Accordingly, the processor can continuously adjust the activation control signal of the panel according to the determined curvature to achieve a desired curvature and/or a desired stiffness. This feature may be important as actuator efficacy and/or panel stiffness may change over time. Thus, over time, a different activation voltage may be required to achieve the same curvature or stiffness in the variable curvature interactive device panel. In other embodiments, curvature modification may be necessary due to interactions of the variable curvature interactive device panel with external objects, such as a user's hands or body, surfaces on which the variable curvature interactive device panel rests, and/or housings or cases in which the variable curvature interactive device panel is placed. For example, a variable curvature interactive device panel incorporated into a flexible user device may behave differently than a variable curvature interactive device panel outside of a flexible user device. If that flexible user device is placed inside of a protective case or the like, the variable curvature interactive device panel may behave differently still. Thus, the processor is configured to actively adjust the activation control signal according to sensor determined curvature information to control the curvature of the variable curvature interactive device panel in a feedback loop.

In some embodiments, the processor may adjust the control signal in an open loop fashion, according to correlations between panel stiffness and panel curvature. The memory unit of the controller may store a look up table or other data store containing correlation information between the panel stiffness and the panel curvature. Accordingly, even without closed loop control, the controller may function accurately to provide the appropriate amount of curvature to induce a specific stiffness.

In an operation 810, the curvature modification process 800 includes optionally detecting user input according to panel curvature information provided by the one or more sensors. As discussed above, the one or more sensors are configured to determine panel curvature information of the variable curvature interactive device along in a direction of any dimension of the panel. Bending of the panel imparted by a user may be detected by the one or more sensors and transmitted or otherwise conveyed to the processor. The processor is configured to interpret such panel curvature information as user input. In some embodiments, the processor is configured to differentiate between panel curvature information indicating panel curvature caused by the one or more actuators and panel curvature caused by a user input. Such differentiation may be performed, for example, by comparing the panel curvature expected according to an activation control signal supplied by the controller to the panel curvature detected by the one or more sensors.

The above describes an illustrative flow of an example process 800 of modifying the stiffness of a variable curvature interactive device. The process as illustrated in FIG. 9 is exemplary only, and variations exist without departing from the scope of the embodiments disclosed herein. The steps may be performed in a different order than that described, additional steps may be performed, and/or fewer steps may be performed.

Additional discussion of various embodiments.
Embodiment 1 is a variable curvature interactive device, including a panel having a length dimension and a width dimension, the length dimension and the width dimension defining a plane of the panel, an actuator disposed on the panel, the actuator being configured to provide a bending force to the panel in a direction of the width dimension when activated, and a circuit configured to provide an activation signal to the actuator.
The actuator is configured such that the bending force induces a curvature in the panel in the width dimension, the curvature of the panel causing an increase in the stiffness of the panel in a direction of the length dimension.
Embodiment 2 is the variable curvature interactive device of embodiment 1, further including a width dimension sensor configured to determine a width dimension curvature.
Embodiment 3 is the variable curvature interactive device of embodiment 1 or 2, further including a length dimension sensor configured to determine a length dimension curvature.
Embodiment 4 is the variable curvature interactive device of any of embodiments 1 to 3, further including a processor configured to provide the activation signal to the actuator via the circuit, wherein the processor is further configured to increase the stiffness of the panel according to a software application.
Embodiment 5 is the variable curvature interactive device of any of embodiments 1 to 4, further including a processor configured to provide the activation signal to the actuator via the circuit, wherein the processor is further configured to receive width dimension curvature input from the width dimension sensor and use the width dimension curvature input to adjust the activation signal.
Embodiment 6 is the variable curvature interactive device of any of embodiments 1 to 5, further comprising a processor configured to provide an activation signal to the actuator via the circuit, wherein the processor is further configured to receive length dimension curvature input from the length dimension sensor; and provide the length dimension curvature input to a software application as an input.
Embodiment 7 is the variable curvature interactive device of any of embodiments 1 to 6, wherein the variable curvature interactive device is configured to function as an immersive reality input device.
Embodiment 8 is the variable curvature interactive device of any of embodiments 1 to 7, wherein the actuator is a width dimension actuator and the bending force is a width dimension bending force, and the variable curvature interactive device further includes a length dimension actuator disposed on the panel, the length dimension actuator being configured to provide a length dimension bending force to the panel in a direction of the length dimension when activated, wherein the length dimension actuator is configured such that the length dimension bending force induces a length dimension curvature in the panel in the length dimension, the length dimension curvature of the panel serving to increase the stiffness of the panel in the direction of the width dimension.
Embodiment 9 is the variable curvature interactive device of any of embodiments 1 to 8, wherein the actuator includes at least one of an MFC actuator and a smart memory actuator.
Embodiment 10 is the variable curvature interactive device of any of embodiments 1 to 9, wherein the actuator is further configured to provide a vibration haptic effect in response to the activation signal.
Embodiment 11 is the variable curvature interactive device of any of embodiments 1 to 10, further comprising a display screen.
Embodiment 12 is a method of modifying the curvature of a variable curvature interactive device, including: providing an activation signal to an actuator disposed on a panel having a length dimension and a width dimension, wherein the length dimension and the width dimension define a plane of the panel; providing a bending force to the panel in a direction of the width dimension by the actuator in response to the activation signal; inducing a curvature of the panel in the width dimension by the bending force; and increasing the stiffness of the panel in a direction of the length dimension based on the curvature.
Embodiment 13 is the method of embodiment 12, further including determining a width dimension curvature in the direction of the width dimension with a width dimension sensor; and adjusting the activation signal according to the width dimension curvature.
Embodiment 14 is the method of embodiment 12 or 13, further including determining a length dimension curvature in a direction of the length dimension with a length dimension sensor; and adjusting the activation signal according to the length dimension curvature.
Embodiment 15 is the method of any of embodiments 12 to 14, further including increasing the stiffness of the panel by a processor and according to a software application.
Embodiment 16 is the method of any of embodiments 12 to 15, further including receiving a bending input from a user as an input to an immersive reality system.
Embodiment 17 is the method of any of embodiments 12 to 16, wherein the actuator is a width dimension actuator and the bending force is a width dimension bending force, the method further including providing; a length dimension bending force to the panel in a direction of the length dimension with a length dimension actuator, inducing a length dimension curvature in the panel in the direction of the length dimension by the length dimension bending force; and increasing the stiffness of the panel in the direction of the width dimension in response to the length dimension curvature.
Embodiment 18 is the method of any of embodiments 12 to 17, wherein the actuator includes at least one of an MFC actuator and a smart memory actuator.
Embodiment 19 is the method of any of embodiments 12 to 18, further including providing a vibration haptic effect with the actuator.
Embodiment 20 is the method of any of embodiments 12 to 19, further including providing a visual display via a display screen.

Thus, there are provided systems, devices, and methods for modifying the curvature of an interactive device. While various embodiments according to the present invention have been described above, it should be understood that they have been presented by way of illustration and example only, and not limitation. It will be apparent to persons skilled in the relevant art that various changes in form and detail can be made therein without departing from the spirit and scope of the invention. Thus, the breadth and scope of the present invention should not be limited by any of the above-described exemplary embodiments but should be defined only in accordance with the appended claims and their equivalents. It will also be understood that each feature of each embodiment discussed herein, and of each reference cited herein, can be used in combination with the features of any other embodiment. Aspects of the above methods of generating modifying curvature and generating haptic effects may be used in any combination with other methods described herein or the methods can be used separately.

## Claims

1. A variable curvature interactive device, comprising:
a panel having a length dimension and a width dimension;
an actuator disposed on the panel, the actuator being configured to provide a bending force to the panel in a direction of the width dimension when activated; and
a circuit configured to provide an activation signal to the actuator,
wherein the actuator is configured such that the bending force induces a curvature in the panel in the width dimension, the curvature of the panel causing an increase in the stiffness of the panel in a direction of the length dimension.

2. The variable curvature interactive device of claim 1, further comprising a width dimension sensor configured to determine a width dimension curvature.

3. The variable curvature interactive device of claim 1, further comprising a length dimension sensor configured to determine a length dimension curvature.

4. The variable curvature interactive device of claim 1, further comprising a processor configured to provide the activation signal to the actuator via the circuit, wherein the processor is further configured to increase the stiffness of the panel according to a software application.

5. The variable curvature interactive device of claim 2, further comprising a processor configured to provide the activation signal to the actuator via the circuit, wherein the processor is further configured to
receive width dimension curvature input from the width dimension sensor; and
use the width dimension curvature input to adjust the activation signal.

6. The variable curvature interactive device of claim 3, further comprising a processor configured to provide an activation signal to the actuator via the circuit, wherein the processor is further configured to
receive length dimension curvature input from the length dimension sensor; and provide the length dimension curvature input to a software application as an input.

7. The variable curvature interactive device of claim 1, wherein the variable curvature interactive device is configured to function as an immersive reality input device.

8. The variable curvature interactive device of claim 1, wherein the actuator is a width dimension actuator and the bending force is a width dimension bending force, and the variable curvature interactive device further comprises:
a length dimension actuator disposed on the panel, the length dimension actuator being configured to provide a length dimension bending force to the panel in a direction of the length dimension when activated,
wherein the length dimension actuator is configured such that the length dimension bending force induces a length dimension curvature in the panel in the length dimension, the length dimension curvature of the panel serving to increase the stiffness of the panel in the direction of the width dimension.

9. The variable curvature interactive device of claim 1, wherein the actuator comprises at least one of an MFC actuator and a smart memory actuator; or
wherein the actuator is further configured to provide a vibration haptic effect in response to the activation signal.

10. A method of modifying the curvature of a variable curvature interactive device having an actuator and a panel, comprising:
providing an activation signal to the actuator disposed on the panel, the panel having a length dimension and a width dimension;
providing, by the actuator in response to the activation signal, a bending force to the panel in a direction of the width dimension;
inducing, by the bending force, a curvature of the panel in the width dimension; and
increasing, based on the curvature of the panel, the stiffness of the panel in a direction of the length dimension.

11. The method of claim 10, further comprising:
determining a width dimension curvature in the direction of the width dimension with a width dimension sensor; and
adjusting the activation signal according to the width dimension curvature; or
determining a length dimension curvature in a direction of the length dimension with a length dimension sensor; and
adjusting the activation signal according to the length dimension curvature.

12. The method of claim 10, further comprising increasing the stiffness of the panel by a processor and according to a software application.

13. The method of claim 10, further comprising receiving a bending input from a user as an input to an immersive reality system.

14. The method of claim 10, wherein the actuator is a width dimension actuator and the bending force is a width dimension bending force, the method further comprising:
providing with a length dimension actuator a length dimension bending force to the panel in a direction of the length dimension;
inducing, by the length dimension bending force, a length dimension curvature in the panel in the direction of the length dimension; and
increasing, in response to the length dimension curvature, the stiffness of the panel in the direction of the width dimension.

15. The method of claim 10, further comprising providing a vibration haptic effect with the actuator; or
further comprising providing a visual display via a display screen.
